# FASCICULE DE BREVET EUROPEEN

(11) **EP 3 380 801 B1**
(45) Date de publication et mention de la délivrance du brevet: **09.09.2020**
(21) Numéro de dépôt: 16813002.9
(22) Date de dépôt: 22.11.2016
(51) Int. Cl.: F28D 20/00

(54) **SYSTEME DE STOCKAGE/DESTOCKAGE D'ENERGIE POUR UNE INSTALLATION**
ENERGIESPEICHER-/ENTNAHMESYSTEM FÜR EINE ANLAGE
ENERGY STORAGE/WITHDRAWAL SYSTEM FOR A FACILITY

(30) Priorité: 25.11.2015 FR 1561339
(43) Date de publication de la demande: 03.10.2018
(73) Titulaire: Université Toulouse III-Paul Sabatier, 31062 Toulouse Cedex 9 (FR); Institut National des Sciences Appliquées de Toulouse, 31077 Toulouse Cedex 4 (FR)
(72) Inventeur: CYR, Martin, 31600 Eaunes (FR); GINESTET, Stéphane, 31520 Ramonville Saint Agne (FR); NDIAYE, Khadim, 31400 Toulouse (FR)
(74) Mandataire: Allain, Laurent
(86) Numéro de dépôt international: PCT/FR2016/053050
(87) Numéro de publication internationale: WO 2017/089698

(56) Documents cités:
- EP-A1- 2 576 720
- L STRUBLE ET AL: "Heats of dehydration and specific heats of compounds found in concrete and their potential for thermal energy storage", SOLAR ENERGY MATERIALS, vol. 14, no. 1, 1 août 1986 (1986-08-01), pages 1-12, XP055006293, ISSN: 0165-1633, DOI: 10.1016/0165-1633(86)90008-0

## Description

L'invention se rapporte à un système de stockage/déstockage d'énergie pour une installation. Un système selon le préambule de la revendication 1 est connu du document EP 2 576 720.

La surconsommation énergétique mondiale a des conséquences considérables sur le plan environnemental et socio-économique. L'épuisement progressif des énergies non renouvelables et la hausse des prix de l'énergie ont entrainé l'émergence de directives visant à augmenter de 20% l'efficacité énergétique d'ici 2020 au niveau de l'Union Européenne. Le bâtiment est le secteur le plus consommateur d'énergie devant l'industrie et le transport, la majeure partie de cette énergie étant consommée sous forme calorifique pour maintenir un certain confort thermique.

En Europe, le secteur du bâtiment est le plus grand consommateur d'énergie primaire, représentant 40% de l'énergie totale consommée, et est responsable de 36% des émissions de CO₂, plus de la moitié de cette énergie étant consommée sous forme de chaleur. Ce secteur a donc le plus gros potentiel d'économie d'énergie.

L'utilisation de l'énergie solaire est aujourd'hui essentielle pour améliorer la performance énergétique des bâtiments et limiter leur impact sur l'environnement. Or, un inconvénient majeur de l'énergie solaire est constitué par son intermittence. En effet, en été l'énergie solaire excède les besoins énergétiques contrairement à l'hiver où l'énergie thermique est en déficit. Un stockage d'énergie thermique saisonnier peut éviter ce déphasage et augmenter l'utilisation de l'énergie solaire dans le secteur du bâtiment. Les matériaux de grande capacité calorifique (stockage à chaleur sensible) et les matériaux à changement de phase (stockage latent) sont largement utilisés dans le secteur du bâtiment pour stocker l'énergie solaire à court terme.

La demande de brevet WO2009144233 décrit un système de stockage de chaleur sensible dans un bloc de béton monolithique. Un inconvénient de ce système est qu'il présente une densité de stockage faible. De plus, ce système nécessite un chauffage permanent et une isolation parfaite pour éviter les pertes thermiques qui s'amplifient avec la durée de stockage de chaleur, ces deux actions constituant des contraintes importantes.

Donc les inconvénients liés aux systèmes de stockage de chaleur sensible sont une faible densité de stockage à basse température une perte calorifique pendant ce stockage, leur encombrement et une durée de stockage limitée.

Les systèmes de stockage impliquant des matériaux à changement de phase (stockage par chaleur latente), même s'ils possèdent une densité de stockage énergétique supérieure à celle des systèmes de stockage impliquant des matériaux à grande capacité calorifique (stockage à chaleur sensible), présentent également pour certains, un certain nombre d'inconvénients :
- une faible enthalpie de changement de phase,
- une inflammabilité,
- une rapidité de changement de phase,
- une durée de stockage limitée,
- une instabilité volumique

Une autre solution consiste à utiliser des systèmes de stockage de chaleur par sorption. Les matériaux de stockage par sorption sont des matériaux très poreux, souvent sous la forme de minuscules billes poreuses (lit de poudre). Le chauffage du matériau adsorbant entraine une désorption endothermique (rupture des liaisons entre le solide et les molécules gazeuses). C'est la phase de charge. L'enthalpie de désorption stockée dans le matériau est restituée lors de l'adsorption (réaction exothermique) des molécules désorbées. C'est la phase de décharge. Selon le matériau utilisé, le processus de stockage peut être dû à une adsorption physique et/ou chimique. Ces systèmes de stockage présentent l'inconvénient de posséder une faible densité de stockage et un temps de déstockage court.

Une autre solution consiste à utiliser des systèmes de stockage par chaleur chimique mettant en jeu de l'énergie thermique issue d'une réaction chimique dans le matériau de stockage. Dans la phase de charge, le matériau est chauffé, par exemple avec de l'énergie solaire, jusqu'à sa décomposition chimique en deux éléments distincts stables. L'énergie thermique stockée, correspondant à l'enthalpie de décomposition, est restituée lors d'une réaction chimique exothermique des deux éléments stables. Malgré leur forte densité de stockage de chaleur, les principaux inconvénients de la plupart des matériaux de stockage chimique sont les suivants,
- une température de stockage élevée,
- l'irréversibilité de la réaction,
- une certaine complexité du processus de stockage,
- une toxicité significative,
- un prix élevé.

Une autre solution consiste à stocker de la chaleur par l'ettringite, qui est un minéral composé de sulfate de calcium, d'aluminate de calcium et d'eau. Ce matériau possède à la fois le comportement des matériaux de stockage par sorption (performance à court terme) et celui des matériaux de stockage par réaction chimique (performance à long terme). En effet l'ettringite présente l'avantage d'avoir une grande densité de stockage thermochimique à basse température (inférieure à 70°C) grâce au processus physico-chimique mis en œuvre. La chaleur y est stockée par chauffage endothermique (désorption+déshydratation) du matériau, qui se déshydrate puis devient métaettringite. La chaleur peut alors être déstockée par adsorption exothermique (adsorption+ hydratation). L'utilisation de ce matériau cimentaire comme matériau de stockage thermochimique dans le secteur du bâtiment est limitée par des problèmes de durabilité, de carbonatation et de réversibilité.

Un système de stockage/déstockage d'énergie selon l'invention, s'affranchit de tous les inconvénients relevés dans l'état de la technique.

Afin de faciliter la compréhension de la description, une phase de stockage d'énergie comprend une phase active de charge de ladite énergie dans le matériau et une phase passive de conservation de ladite énergie dans ledit matériau. Lors de cette phase passive, le système de stockage/déstockage n'est le siège d'aucune réaction thermochimique et le fluide caloporteur ne circule pas dans ledit système.

L'invention a pour objet un système de stockage/déstockage d'énergie thermique.

Un système de stockage/déstockage d'énergie selon l'invention comprend les caractéristiques de la revendication 1.

Un tel système peut être utilisé, soit pour stocker de la chaleur, soit pour restituer cette chaleur une fois que celle-ci aura été stockée. Ainsi, en phase de stockage de chaleur, le dispositif de chauffage est activé pour chauffer le fluide caloporteur afin d'obtenir un gaz chaud (température supérieure à 30°C) et sec. Ce gaz chaud passe ensuite à travers le matériau cimentaire monolithique comportant de l'ettringite, qui se déshydrate progressivement, provoquant la phase de stockage de la chaleur. Pour cette configuration, le gaz chaud interagit directement avec le matériau cimentaire en étant diffusé de façon homogène à travers la totalité de son volume. Cette interaction étroite est rendue possible grâce à la bonne porosité du matériau cimentaire comprenant l'ettringite. En effet, grâce à cette porosité marquée, il n'est pas nécessaire de mettre en œuvre un dispositif de distribution de gaz chaud au sein du matériau cimentaire comprenant l'ettringite, comme par exemple un réseau de tubulures de circulation de gaz chaud. Lors de cette phase de charge de chaleur, le dispositif d'humidification n'est pas sollicité, et la chaleur emmagasinée par le matériau cimentaire n'est pas restituée tant que ledit matériau n'est pas au contact de l'eau, sous forme de liquide ou de vapeur. En phase de décharge de la chaleur, le dispositif d'humidification est sollicité pour charger en vapeur d'eau le fluide caloporteur. Le gaz humidifié résultant passe à travers le matériau cimentaire qui adsorbe la vapeur d'eau, puis s'hydrate, engendrant une réaction exothermique, qui produit alors de la chaleur. Pour cette configuration, le gaz humidifié interagit directement avec le matériau cimentaire en étant diffusé de façon homogène à travers la totalité de son volume. Cette interaction étroite est rendue possible grâce à la bonne porosité du matériau cimentaire comprenant l'ettringite. En effet, grâce à cette porosité marquée, il n'est pas nécessaire de mettre en œuvre un dispositif de distribution de gaz chaud au sein du matériau cimentaire comprenant l'ettringite, comme par exemple un réseau de tubulures de circulation de gaz chaud. Pendant cette phase de restitution de la chaleur, le gaz froid et humidifié initial se transforme en gaz chaud et sec à la sortie du matériau cimentaire. Le passage d'un gaz à travers le matériau est rendu possible grâce à la porosité importante du matériau cimentaire comprenant l'ettringite. Il est important de s'assurer que du dioxyde de carbone ne vient pas au contact du matériau cimentaire monolithique, sous peine d'entrainer une carbonatation du matériau, et donc une dégradation irréversible puis une baisse de rendement du système de stockage/déstockage. Afin d'éviter un tel contact préjudiciable, le fluide caloporteur peut être constitué par un gaz inerte comme par exemple de l'azote. En revanche, si le gaz caloporteur choisi était amené à transporter du dioxyde de carbone, il faut alors prévoir de piéger ces particules de dioxyde de carbone en amont du matériau cimentaire, au moyen par exemple d'une membrane sélective. Il peut être prévu qu'un système selon l'invention assure simultanément une phase de stockage et de déstockage de chaleur, en créant notamment deux circuits de circulation de fluide caloporteur en parallèle. Préférentiellement, un système de stockage/déstockage d'énergie selon l'invention, comprend au moins un circuit de circulation de fluide caloporteur passant par le dispositif de chauffage et par le dispositif d'humidification, ledit circuit étant alimenté par une source dudit fluide et débouchant sur le matériau cimentaire. Il est supposé que la phase de stockage comprend une phase active de charge de la chaleur dans le matériau cimentaire, et une phase passive de conservation de cette chaleur dans ledit matériau cimentaire, le dispositif de chauffage étant activé uniquement lors de cette phase de charge. L'isolant hydrique constitue une barrière destinée à empêcher de la vapeur d'eau de venir au contact du matériau cimentaire.

Avantageusement, le fluide caloporteur est constitué par un gaz inerte. Préférentiellement, ce gaz inerte est de l'azote. Un tel fluide permet d'éviter une pollution du matériau cimentaire avec du dioxyde de carbone.

Selon l'invention, la source du fluide caloporteur est placée en amont du dispositif d'humidification, qui est lui-même placé en amont du dispositif de chauffage, ledit dispositif de chauffage étant placé en amont du matériau cimentaire. Il s'agit d'un mode de réalisation adapté à un système selon l'invention.

Préférentiellement, le dispositif d'humidification et le dispositif de chauffage fonctionnent chacun sur commande, et peuvent être activés indépendamment l'un de l'autre en fonction de l'utilisation dudit système, soit en phase de stockage, soit en phase de déstockage. Les différents éléments constitutifs d'un système de stockage/déstockage selon l'invention sont nécessaires à ces fonctions de stockage et de déstockage d'énergie, mais n'ont pas forcément vocation à fonctionner simultanément.

De façon avantageuse, la fraction massique d'ettringite dans le matériau cimentaire est comprise entre 20% et 90%. L'ettringite doit être massivement présente dans le matériau cimentaire monolithique, pour assurer dans des conditions optimisées les phases de stockage et de déstockage de la chaleur.

Avantageusement, le matériau cimentaire possède une porosité comprise entre 10% et 90%.

De façon préférentielle, le matériau présente une perméabilité comprise entre 10⁻¹⁷ m² et 10⁻¹¹ m².

De façon avantageuse, le matériau cimentaire présente une résistance mécanique comprise entre 0.1MPa et 70MPa.

Préférentiellement, l'isolant hydrique est constitué par une paroi étanche destinée à empêcher de la vapeur d'eau de venir au contact du matériau cimentaire. Cette paroi peut par exemple être constituée par du PVC. Il s'agit d'un exemple non limitatif d'un isolant hydrique présentant une bonne isolation hydrique tout en demeurant léger.

De façon avantageuse, l'isolant thermique est constitué par au moins un matériau à choisir parmi de la laine de verre et du polystyrène, ledit au moins un matériau étant placé autour de l'isolant hydrique.

Avantageusement, le dispositif d'humidification comprend au moins un humidificateur apte à charger en eau ledit fluide. Cet humidificateur peut par exemple être constitué par un barboteur.

L'invention a pour autre objet un procédé de stockage/déstockage d'énergie thermique à partir d'un système de stockage/déstockage conforme à l'invention.

La principale caractéristique d'un procédé selon l'invention est que, en phase de stockage de la chaleur, il comporte les étapes suivantes,
- une étape de chauffage du fluide caloporteur pour obtenir un gaz chaud dont la température est supérieure à 30°C,
- une étape de passage direct dudit gaz chaud à travers le matériau cimentaire comprenant l'ettringite, provoquant une déshydratation endothermique et constituant une phase de stockage de chaleur.

Le passage du gaz chaud dans le matériau cimentaire permet de porter ledit matériau à une température comprise entre 30°C et 100 °C. Il est supposé que le matériau cimentaire comprenant l'ettringite est à pression atmosphérique. La température de décomposition de l'ettringite augmente fortement avec la pression de vapeur d'eau. Par exemple, si le matériau se retrouvait soumis à une pression de vapeur d'eau de 8000 Pa, la température de stockage dudit matériau pourrait atteindre 80°C, sans décomposer l'ettringite. La phase de stockage de la chaleur mentionnée lors de l'étape de passage du gaz à travers le matériau cimentaire, correspond à la phase de charge de la chaleur dans le matériau cimentaire. Le terme « direct » signifie que le gaz chaud traverse le matériau cimentaire comprenant l'ettringite sans l'aide d'un quelconque dispositif spécifique d'acheminement, comme par exemple des tubulures qui seraient placées autour et/ou à l'intérieur dudit matériau. Le passage des gaz s'effectue à travers la totalité du volume du matériau cimentaire, grâce à sa bonne porosité.

Avantageusement, la phase de stockage de chaleur s'étend sur une période de plusieurs jours, ladite période étant dictée par la quantité de matériau cimentaire mise en œuvre dans un système selon l'invention. Il s'agit plus précisément de la période de la phase de charge de la chaleur dans le matériau.

De façon préférentielle, un procédé de stockage/déstockage selon l'invention, comporte en phase de déstockage de la chaleur, les étapes suivantes,
- une étape d'humidification du fluide caloporteur au moyen du dispositif d'humidification pour obtenir un gaz humidifié,
- une étape de passage direct dudit gaz humidifié à travers le matériau cimentaire comprenant l'ettringite et qui adsorbe de la vapeur d'eau puis s'hydrate,
- une étape de réaction exothermique qui génère de la chaleur transportée par le fluide caloporteur, transformant le gaz initialement froid et humide, en un gaz chaud et sec.

C'est la restitution de ce gaz sec et chaud qui constitue la production de chaleur.

Préférentiellement, un procédé de stockage/déstockage selon l'invention comporte une étape d'élimination du dioxyde de carbone dans le fluide caloporteur avant qu'il ne vienne traverser le matériau cimentaire comprenant l'ettringite, afin d'éviter une réaction de carbonatation dudit matériau. En effet, si le fluide caloporteur n'est pas un gaz inerte, il peut être susceptible de transporter du CO₂. Afin d'éviter une carbonatation du matériau cimentaire comprenant l'ettringite, qui nuirait grandement au rendement d'un système selon l'invention, il faut piéger le CO₂ avant qu'il ne vienne au contact dudit matériau cimentaire. Une membrane peut ainsi avantageusement être utilisée pour stopper les molécules de CO₂ en amont de ce matériau cimentaire. Le terme « direct » signifie que le gaz humidifié traverse le matériau cimentaire comprenant l'ettringite sans l'aide d'un quelconque dispositif spécifique d'acheminement, comme par exemple des tubulures qui seraient placées autour et/ou à l'intérieur dudit matériau. Le passage des gaz s'effectue à travers la totalité du volume du matériau cimentaire, grâce à sa bonne porosité.

L'invention a pour autre objet un matériau cimentaire comprenant de l'ettringite pour la réalisation d'un système de stockage/déstockage selon l'invention.

Avantageusement, un matériau cimentaire selon l'invention comprend un liant ettringitique dont la porosité et la perméabilité sont augmentées par moussage chimique et/ou par moussage mécanique. Le moussage chimique consiste en des ajouts de poudre d'aluminium ou d'autres agents moussants, et le moussage mécanique consiste en des ajouts de tensioactif et en un malaxage mécanique. Une forte perméabilité associée à une forte porosité du matériau ettringitique favorise l'accessibilité de la vapeur d'eau aux cristaux ettringitique, et donc l'efficacité du processus de stockage de chaleur dans le matériau.

Un système de stockage/déstockage d'énergie selon l'invention présente les avantages suivants :
- une densité de stockage largement supérieure à celle des systèmes de stockage/déstockage à basse température existants. Le matériau ettringitique présente l'avantage de combiner à la fois le stockage d'énergie par physisorption et le stockage par chimisorption. Ceci lui confère une densité de stockage élevée par rapport au matériau de stockage de chaleur sensible, latente, à sorption physique ou à sorption chimique à basse température.
- l'utilisation de l'ettringite ne nécessite pas d'isolation thermique pendant la phase intermédiaire de stockage. Dans un procédé de stockage/déstockage selon l'invention, il existe une phase active de charge de la chaleur, une phase de conservation de la chaleur et une phase de déstockage de chaleur, ladite phase active et ladite phase de conservation constituant la phase de stockage de la chaleur. La phase de conservation peut durer généralement longtemps, plusieurs mois environ pour un stockage saisonnier. Avec l'ettringite, la chaleur emmagasinée par réaction chimique est conservée tant que le matériau est isolé de l'eau sous forme liquide ou vapeur.
- un tel système est aussi bien adapté pour le court terme que pour le long terme. La non nécessité d'une isolation thermique le rend performant pour les phases de stockage à long terme contrairement aux systèmes de stockage/déstockage existants.
- un tel système permet un bon contrôle de la phase de stockage de la chaleur. La phase de charge de la chaleur (désorption et déshydratation) peut se faire en plusieurs étapes décalées dans le temps, rendant le système de stockage/déstockage adapté aux saisons où l'ensoleillement est éphémère. Il faut plusieurs jours pour obtenir une déshydratation complète du matériau en fonction de la taille du matériau mise en œuvre, et donc pour charger complètement ledit matériau en chaleur. Cette déshydratation peut s'effectuer par intermittence, l'ensoleillement peut par exemple déshydrater partiellement le matériau le premier jour, et peut compléter la déshydratation les jours suivants avec une possibilité de décharger de la chaleur en cas de besoin.
- un tel système permet un bon contrôle de la phase de déstockage de la chaleur. Comme pendant la phase de chargement de la chaleur, la chaleur stockée peut être restituée en plusieurs étapes, en contrôlant la quantité de gaz adsorbée.
- L'ettringite possède une faible température de stockage, de l'ordre de 60°C. Cette température peut facilement être atteinte au moyen d'un capteur solaire classique.
- Le matériau ettringitique est un matériau monolithique, qui est parfaitement adapté à une mise en œuvre dans une installation sous forme de murs et/ou de briques et/ou de parois, contrairement à un lit de poudre. Le matériau cimentaire peut, soit s'auto-porter, soit servir de structure porteuse au sein d'un édifice constitué de plusieurs matériaux. En effet, sa résistance mécanique en compression est comprise entre 0.1 MPa et 70MPa.
- Il peut engendrer de longues phases de déstockage de la chaleur. En effet, la combinaison physico-chimique du processus de stockage confère au matériau une longue phase de décharge. Pendant la phase initiale de décharge de chaleur, c'est l'adsorption physique (réaction exothermique), qui engendre l'augmentation de la température en quelques heures, ensuite la température est maintenue voire augmentée par l'hydratation exothermique dont la cinétique est lente et peut durer plusieurs jours.

On donne, ci-après, une description détaillée d'un mode de réalisation préféré d'un système de stockage/déstockage d'énergie selon l'invention et du procédé de stockage/déstockage associé en se référant aux figures suivantes :
- la figure 1 est une vue schématique générale d'un système de stockage/déstockage selon l'invention,
- La figure 2 est une vue schématique de la partie du système de la figure 1 requise pour la phase de stockage de la chaleur,
- La figure 3 est une vue schématique de la partie du système de la figure 1 requise pour la phase de déstockage de la chaleur,
- La figure 4 est une vue schématique d'un réacteur thermochimique d'un système de stockage/déstockage selon l'invention,
- La figure 5 est un diagramme illustrant un exemple de variation de la température dans un matériau cimentaire d'un système de stockage/déstockage selon l'invention, lors d'une phase de déstockage de la chaleur,
- La figure 6 est un diagramme illustrant un exemple de variation de la température dans un matériau cimentaire d'un système de stockage/déstockage selon l'invention, lors de deux cycles de déstockage de la chaleur.

Afin de faciliter la lecture de la description détaillée, un « système de stockage/déstockage » sera désigné sous la simple appellation de « système ». De même, un « procédé de stockage/déstockage » sera désigné sous la simple appellation de « procédé ».

Un matériau cimentaire 1 d'un système selon l'invention est destiné à constituer le matériau constitutif des murs et/ou de diverses cloisons d'une installation industrielle ou d'un logement domestique. Afin de décrire le principe de fonctionnement d'un tel système et les différentes étapes du procédé associé, la description détaillée va se focaliser sur un système comprenant un réacteur thermochimique dont la structure et les propriétés physico-chimiques sont représentatives de celles des murs ou cloisons, qui seraient constitués par ce matériau cimentaire.

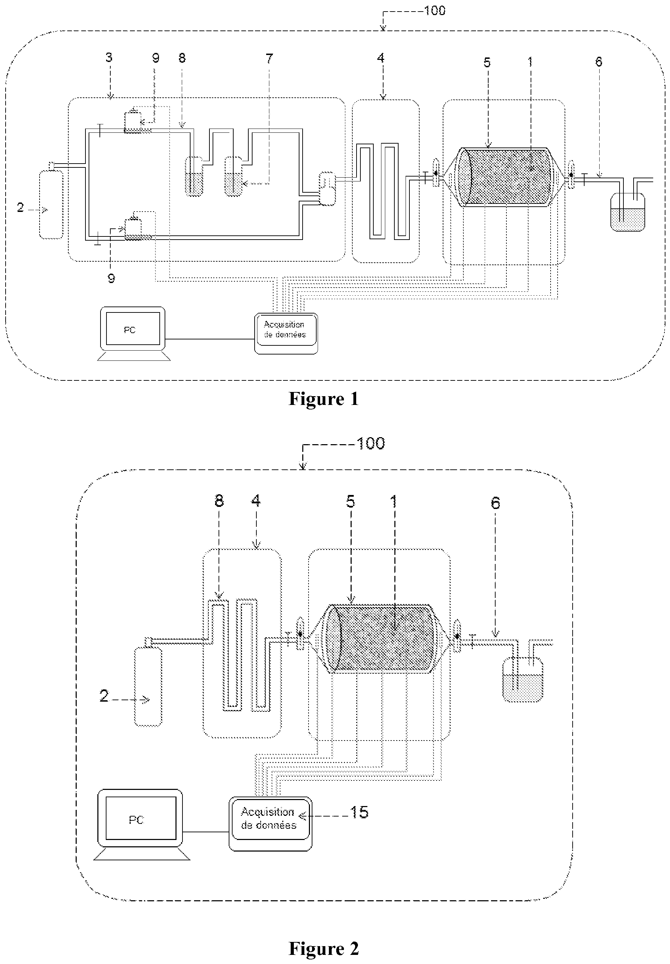

En se référant à la figure 1, un système 100 selon l'invention comprend un circuit 8 de circulation d'un fluide caloporteur, comportant une source 2 dudit fluide, un dispositif d'humidification 3, un dispositif de chauffage 4, le réacteur thermochimique 5 comprenant le matériau cimentaire 1, et une sortie 6 de ce fluide caloporteur. Dans l'exemple considéré, la source 2 de fluide caloporteur est une bouteille d'azote. Le dispositif d'humidification 3 comprend au moins un barboteur 7 apte à charger l'azote en eau, ladite eau pouvant se présentée sous la forme d'un liquide ou de vapeur. Le circuit 8 possède au moins un débitmètre 9 permettant de mesurer le débit d'azote et donc de le contrôler. Le dispositif de chauffage 4 comprend au moins un capteur solaire ou une autre source d'énergie préférentiellement renouvelable apte à récupérer de la chaleur sur une gamme de températures comprise entre 30°C et 100°C. Le dispositif de chauffage 4 et le dispositif d'humidification 3 peuvent être activés indépendamment l'un de l'autre et peuvent donc fonctionner en alternance. Le circuit 8 passe d'abord par le dispositif d'humidification 3, puis par le dispositif de chauffage avant de passer par le réacteur thermochimique 5, le fluide issu du passage à travers ledit réacteur 5 étant ensuite évacué dans l'atmosphère pour chauffer une pièce ou un local.

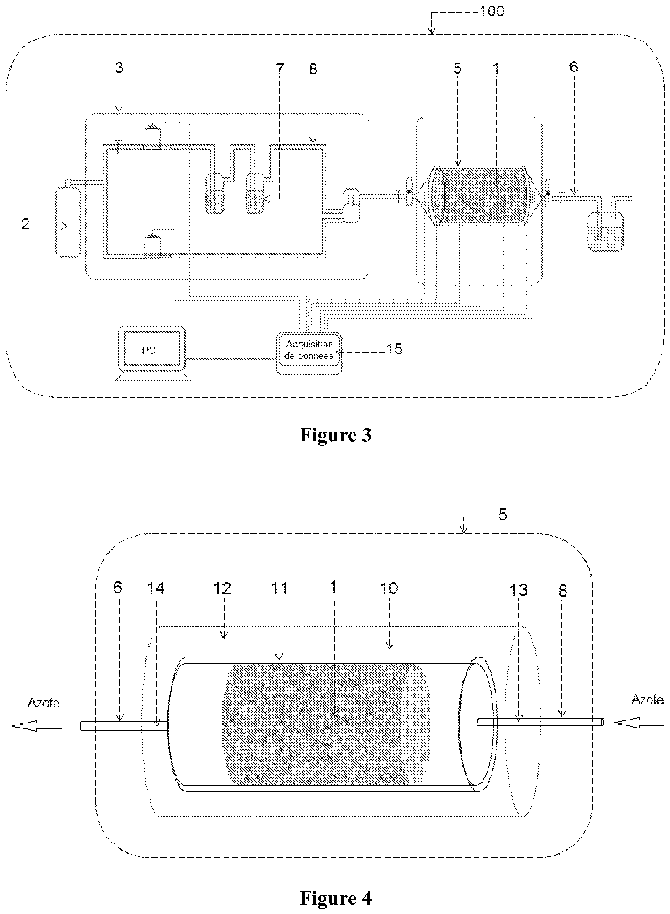

En se référant à la figure 4, le réacteur thermochimique 5 comprend une enveloppe 10 constituée d'une paroi cylindrique enfermant un matériau cimentaire monolithique 1 comportant une fraction massique d'ettringite importante, comprise entre 20% et 90%. Ce matériau 1 constitue un bloc cylindrique ayant les caractéristiques suivantes,
- une forte porosité comprise entre 10% et 90%,
- une perméabilité comprise entre 10⁻¹⁷ m² et 10⁻¹¹ m²,
- une résistance mécanique comprise entre 0.1 MPa et 70MPa.

L'enveloppe 10 est scindée en une enveloppe interne 11 constituée par une couche en PVC (polychlorure de vinyle) venant au contact de la surface latérale externe du bloc cimentaire 1 et en une enveloppe externe 12 constituée par une couche en laine de verre entourant la couche 11 en PVC et en étant au contact de celle-ci. La couche 11 en PVC agit comme un isolant hydrique et la couche 12 en laine de verre agit comme un isolant thermique. Ce réacteur thermochimique 5 possède une arrivée 13 d'azote en provenance du dispositif de chauffage 4 ou du dispositif d'humidification 3, et une sortie 14 d'azote après que cet azote soit passé à travers le bloc cimentaire 1 monolithique. Des capteurs thermiques comme par exemple des thermocouples, et hydriques, peuvent être insérés dans le bloc cimentaire 1 afin de permettre le contrôle de la température dudit bloc 1 et de la pression de vapeur d'eau dans le réacteur 5, au cours du temps.

Tous les éléments de mesure présents dans le système 100 permettent d'acquérir les paramètres de fonctionnement dudit système 100, qui peuvent être ensuite enregistrés et traités par un calculateur 15.

Un système selon l'invention permet de se charger en chaleur, puis de stocker cette chaleur sur une période donnée non limitée dans le temps, avant de la restituer sur commande, au moment où les besoins en chauffage sont effectifs.

Un procédé de stockage/déstockage à partir d'un système 100 selon l'invention, comprend les étapes suivantes :
A- En phase de charge, illustrée à la figure 2 (cette phase peut par exemple avoir lieu en été où l'ensoleillement est important)
   - une étape de chauffage du fluide caloporteur 2 pour obtenir un gaz chaud dont la température est comprise entre 50°C et 70°C, et préférentiellement est égale à 60°C. Cette étape de chauffage est réalisée au moyen du dispositif de chauffage 4, et en particulier, au moyen du capteur solaire.
   - une étape de passage dudit gaz chaud à travers le matériau cimentaire 1 comprenant l'ettringite, provoquant une déshydratation endothermique et constituant une phase de stockage de chaleur. En effet, l'azote se retrouve ainsi chauffé entre 30°C et 100°C, avant de passer à travers le bloc cimentaire 1 logé dans le réacteur thermochimique 5, le passage à travers ledit bloc 1 étant facilité par la porosité élevée de celui-ci. L'azote chauffe alors le bloc cimentaire 1 d'ettringite, qui se déshydrate, simulant la phase de stockage de chaleur. La désorption endothermique de l'eau sur l'ettringite, qui est une réaction physicochimique, permet de stocker de la chaleur. L'énergie thermique est ainsi emmagasinée et conservée dans le matériau cimentaire 1, tant que ledit matériau 1 demeure isolé de l'eau. Pour cette phase de charge, le dispositif d'humidification 3 de l'azote n'est pas sollicité et n'est donc pas activé. Une phase complète de charge dure environ plusieurs jours en fonction de la quantité du matériau cimentaire 1 utilisée et du débit de fluide. A titre d'exemple, il faut en moyenne 3 jours pour quelques kilogrammes de matériau et un débit de l'azote de 2 I/min. La partie chimique du processus de chargement de chaleur (déshydratation endothermique) est liée à la conversion réversible de l'ettringite en métaettringite, par perte de 18 molécules d'eau par molécule d'ettringite :

      3CaO.Al₂O₃.3CaSO₄.30H₂O → 3CaO.Al₂O₃.3CaSO₄.12H₂O + 18H₂O
B- En phase de décharge, illustrée à la figure 3 (cette phase peut par exemple avoir lieu en hiver où les besoins en chauffage sont importants)
   - une étape d'humidification du fluide caloporteur 2 au moyen du dispositif d'humidification 3 pour obtenir un gaz humidifié. Cette étape d'humidification est réalisée au moyen du dispositif d'humidification 3, et en particulier, au moyen des barboteurs. Le gaz issu du dispositif d'humidification 3 se retrouve ainsi chargé en vapeur d'eau. Le gaz humidifié peut traverser le matériau cimentaire 1 monolithique comprenant l'ettringite car ledit matériau 1 est poreux et perméable.
   - une étape de passage dudit gaz humidifié à travers le matériau cimentaire 1 comprenant l'ettringite et qui adsorbe de la vapeur d'eau puis s'hydrate. L'adsorption est un phénomène physique et l'hydratation est un phénomène chimique. La partie chimique du processus de restitution de chaleur est liée à la réhydratation de la métaettringite en ettringite par gain de 18 molécules d'eau par molécule d'ettringite :

      3CaO. Al₂O₃.3CaSO₄.12H₂O + 18H₂O → 3CaO. Al₂O₃.3CaSO₄.30H₂O
   - une étape de réaction exothermique au niveau du matériau cimentaire, qui génère de la chaleur transportée par le fluide caloporteur 2, transformant le gaz initialement froid et humide, en un gaz chaud et sec. Durant cette phase de déstockage de la chaleur, le dispositif de chauffage 4 n'est pas sollicité et n'est donc pas activé.

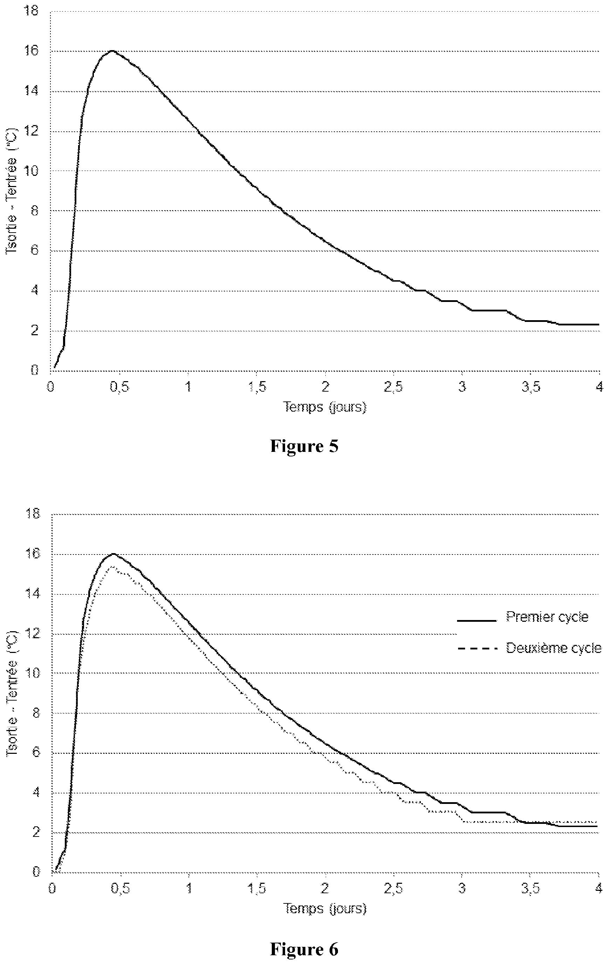

En se référant à la figure 5, l'élévation de la température maximale dans le matériau cimentaire 1 peut par exemple atteindre 16°C, lors d'une phase de déstockage de la chaleur. Cette élévation de température dépend de la quantité de matériau, de l'humidité relative et du débit de fluide mis en œuvre. Un tel diagramme montre que la phase de déstockage de la chaleur peut durer jusqu'à 3 jours, qui demeure une période longue par rapport à celle des systèmes utilisant des matériaux de type zéolite, pour laquelle cette période n'excède pas 24h.

La figure 6 illustre la réversibilité du processus de stockage d'un système selon l'invention. La réversibilité du processus de stockage de chaleur est liée à celle de la réaction chimique de déshydratation et de réhydratation de l'ettringite.

## Revendications

1. Système (100) de stockage/déstockage d'énergie thermique, comprenant,
- un matériau cimentaire (1) monolithique comprenant une fraction massique d'ettringite supérieure à 20%, ledit matériau étant entouré d'un isolant thermique (12) et d'un isolant hydrique (11),
- une source (2) d'un fluide caloporteur,
- un dispositif d'humidification (3) dudit fluide pour la réalisation d'une phase de déstockage du système (100),
- un dispositif de chauffage (4) dudit fluide pour la réalisation d'une phase de stockage dudit système (100),
- une sortie (6) du fluide caloporteur dudit matériau (1),
- au moins un circuit de circulation de fluide caloporteur passant par le dispositif de chauffage (4) et par le dispositif d'humidification (3), ledit circuit étant alimenté par la source (2) dudit fluide et débouchant sur le matériau cimentaire (1),
**caractérisé en ce que** la source (2) du fluide caloporteur est placée en amont du dispositif d'humidification (3), qui est lui-même placé en amont du dispositif de chauffage (4), et **en ce que** ledit dispositif de chauffage (4) est placé en amont du matériau cimentaire (1).

2. Système selon la revendication 1, **caractérisé en ce que** le fluide caloporteur (2) est constitué par un gaz inerte.

3. Système selon l'une quelconque des revendications 1 ou 2, **caractérisé en ce que** le dispositif d'humidification (3) et le dispositif de chauffage (4) fonctionnent chacun sur commande, et peuvent être activés indépendamment l'un de l'autre en fonction de l'utilisation dudit système (100), soit en phase de stockage, soit en phase de déstockage.

4. Système selon l'une quelconque des revendications 1 à 3, **caractérisé en ce que** la fraction massique d'ettringite dans le matériau cimentaire (1) est comprise entre 20% et 90%.

5. Système selon l'une quelconque des revendications 1 à 4, **caractérisé en ce que** le matériau cimentaire possède une porosité comprise entre 10% et 90%.

6. Système selon l'une quelconque des revendications 1 à 5, **caractérisé en ce que** le matériau cimentaire (1) présente une perméabilité comprise entre 10⁻¹⁷ m² et 10⁻¹¹ m².

7. Système selon l'une quelconque des revendications 1 à 6, **caractérisé en ce que** le matériau cimentaire (1) présente une résistance mécanique en compression comprise entre 0.1 MPa et 70MPa.

8. Système selon l'une quelconque des revendications 1 à 7, **caractérisé en ce que** l'isolant hydrique (11) est constitué par une paroi étanche destinée à empêcher de la vapeur d'eau de venir au contact du matériau cimentaire (1).

9. Système selon l'une quelconque des revendications 1 à 8, **caractérisé en ce que** l'isolant thermique (12) est constitué par au moins un matériau à choisir parmi de la laine de verre et du polystyrène, et **en ce que** ledit au moins un matériau étanche est placé autour de l'isolant hydrique (11).

10. Système selon l'une quelconque des revendications 1 à 9, **caractérisé en ce que** le dispositif d'humidification (3) comprend au moins un humidificateur (7) apte à charger en eau ledit fluide (2).

11. Procédé de stockage/déstockage d'énergie thermique à partir d'un système (100) de stockage/déstockage conforme à l'une quelconque des revendications 1 à 10, **caractérisé en ce que**, en phase de stockage de la chaleur, il comporte les étapes suivantes,
- une étape de chauffage au moyen du dispositif de chauffage (4) du fluide caloporteur (2) pour obtenir un gaz chaud dont la température est supérieure à 30°C,
- une étape de passage direct dudit gaz chaud à travers le matériau cimentaire (1) comprenant l'ettringite, provoquant une déshydratation endothermique dudit matériau (1) et constituant une phase de stockage de chaleur.

12. Procédé selon la revendication 11, **caractérisé en ce que** la phase de stockage de chaleur s'étend sur une période de plusieurs jours, ladite période étant dictée par la quantité de matériau cimentaire et le débit de fluide mis en œuvre dans ledit procédé.

13. Procédé selon l'une quelconque des revendications 11 ou 12, **caractérisé en ce que**, en phase de déstockage de la chaleur, il comporte les étapes suivantes,
- une étape d'humidification du fluide caloporteur (2) au moyen du dispositif d'humidification (3) pour obtenir un gaz humidifié,
- une étape de passage direct dudit gaz humidifié à travers le matériau cimentaire (1) comprenant l'ettringite et qui adsorbe de la vapeur d'eau puis s'hydrate,
- une étape de réaction exothermique qui génère de la chaleur transportée par le fluide caloporteur (2), transformant le gaz initialement froid et humide, en un gaz chaud et sec.

14. Procédé selon l'une quelconque des revendications 11 à 13, **caractérisé en ce qu'**il comporte une étape d'élimination du dioxyde de carbone dans le fluide caloporteur (2) avant qu'il ne vienne traverser le matériau cimentaire (1) comprenant l'ettringite afin d'éviter une réaction de carbonatation dudit matériau (1).

## Patentansprüche

1. System (100) zum Speichern/Entnehmen von Wärmeenergie, umfassend:
- ein monolithisches Zementmaterial (1), umfassend eine Massenfraktion Ettringit von über 20 %, wobei das Material von einer Wärmeisolation (12) und einer Wasserisolation (11) umgeben ist,
- eine Quelle (2) eines Wärmeträgerfluids,
- eine Befeuchtungsvorrichtung (3) des Fluids für die Durchführung einer Entnahmephase des Systems (100),
- eine Heizvorrichtung (4) des Fluids für die Durchführung einer Speicherphase des Systems (100),
- einen Auslass (6) des Wärmeträgerfluids des Materials (1),
- mindestens einen Wärmeträgerfluid-Zirkulationskreis, der durch die Heizvorrichtung (4) und durch die Befeuchtungsvorrichtung (3) verläuft, wobei der Kreis von der Quelle (2) des Fluids versorgt wird und auf dem Zementmaterial (1) ausmündet,
**dadurch gekennzeichnet, dass** die Quelle (2) des Wärmeträgerfluids der Befeuchtungsvorrichtung (3) vorgelagert platziert ist, die selbst der Heizvorrichtung (4) vorgelagert platziert ist, und dass die Heizvorrichtung (4) dem Zementmaterial (1) vorgelagert platziert ist.

2. System nach Anspruch 1, **dadurch gekennzeichnet, dass** das Wärmeträgerfluid (2) von einem Inertgas gebildet ist.

3. System nach einem der Ansprüche 1 oder 2, **dadurch gekennzeichnet, dass** die Befeuchtungsvorrichtung (3) und die Heizvorrichtung (4) jeweils auf Befehl funktionieren und unabhängig voneinander in Abhängigkeit von der Benutzung des Systems (100) entweder in der Speicherphase oder in der Entnahmephase aktivierbar sind.

4. System nach einem der Ansprüche 1 bis 3, **dadurch gekennzeichnet, dass** die Massenfraktion Ettringit in dem Zementmaterial (1) zwischen 20 % und 90 % liegt.

5. System nach einem der Ansprüche 1 bis 4, **dadurch gekennzeichnet, dass** das Zementmaterial eine Porosität zwischen 10 % und 90 % besitzt.

6. System nach einem der Ansprüche 1 bis 5, **dadurch gekennzeichnet, dass** das Zementmaterial (1) eine Permeabilität zwischen 10⁻¹⁷ m² und 10⁻¹¹ m² aufweist.

7. System nach einem der Ansprüche 1 bis 6, **dadurch gekennzeichnet, dass** das Zementmaterial (1) eine mechanische Kompressionsfestigkeit zwischen 0,1 MPa und 70 MPa aufweist.

8. System nach einem der Ansprüche 1 bis 7, **dadurch gekennzeichnet, dass** die Wasserisolation (11) von einer dichten Wand gebildet ist, die bestimmt ist zu verhindern, dass Wasserdampf mit dem Zementmaterial (1) in Kontakt kommt.

9. System nach einem der Ansprüche 1 bis 8, **dadurch gekennzeichnet, dass** die Wärmeisolation (12) von mindestens einem Material gebildet ist, das aus der Glaswolle und dem Polystyrol auszuwählen ist, und dass das mindestens eine dichte Material um die Wasserisolation (11) platziert ist.

10. System nach einem der Ansprüche 1 bis 9, **dadurch gekennzeichnet, dass** die Befeuchtungsvorrichtung (3) mindestens einen Befeuchter (7) umfasst, der imstande ist, das Fluid (2) mit Wasser zu beladen.

11. Verfahren zum Speichern/Entnehmen von Wärmeenergie aus einem System (100) zum Speichern/Entnehmen nach einem der Ansprüche 1 bis 10, **dadurch gekennzeichnet, dass** es in der Speicherphase der Wärme die folgenden Schritte aufweist:
- einen Schritt des Heizens mittels der Heizvorrichtung (4) des Wärmeträgerfluids (2), um ein warmes Gas zu erhalten, dessen Temperatur höher als 30 °C ist,
- einen Schritt des direkten Durchgangs des warmen Gases durch das Zementmaterial (1), das Ettringit umfasst, was eine endotherme Dehydrierung des Materials (1) bewirkt und eine Wärmespeicherphase darstellt.

12. Verfahren nach Anspruch 11, **dadurch gekennzeichnet, dass** sich die Wärmespeicherphase über einen Zeitraum von mehreren Tagen erstreckt, wobei der Zeitraum von der Zementmaterialmenge und dem Fluiddurchsatz bestimmt ist, die bei dem Verfahren zum Einsatz kommen.

13. Verfahren nach einem der Ansprüche 11 oder 12, **dadurch gekennzeichnet, dass** es in der Wärmeentnahmephase die folgenden Schritte umfasst:
- einen Befeuchtungsschritt des Wärmeträgerfluids (2) mittels der Befeuchtungsvorrichtung (3), um ein befeuchtetes Gas zu erhalten,
- einen Schritt des direkten Durchgangs des befeuchteten Gases durch das Zementmaterial (1), das Ettringit umfasst, und das Wasserdampf adsorbiert und sich danach hydratisiert,
- einen exothermen Reaktionsschritt, der Wärme erzeugt, die von dem Wärmeträgerfluid (2) befördert wird, wodurch das zunächst kalte und feuchte Gas in ein warmes und trockenes Gas umgewandelt wird.

14. Verfahren nach einem der Ansprüche 11 bis 13, **dadurch gekennzeichnet, dass** es einen Beseitigungsschritt des Kohlendioxids im Wärmeträgerfluid (2) aufweist, bevor es das Zementmaterial (1) durchquert, das Ettringit umfasst, um eine Karbonisierungsreaktion des Materials (1) zu verhindern.

## Claims

1. System (100) for storage/withdrawal of thermal energy, comprising,
- a monolithic cementitious material (1) comprising a mass fraction of ettringite greater than 20%, said material being surrounded by a thermal insulator (12) and a water insulator (11),
- a source (2) of a heat transfer fluid,
- a humidification device (3) of said fluid for carrying out a withdrawal phase of the system (100),
- a heating device (4) of said fluid for carrying out a storage phase of said system (100),
- an outlet (6) of the heat transfer fluid of said material (1),
- at least one circuit for circulation of heat-transfer fluid passing through the heating device (4) and through the humidification device (3), said circuit being supplied by the source (2) of said fluid and opening onto the cementitious material (1),
**characterized in that** the source (2) of the heat transfer fluid is placed upstream of the humidification device (3), which is itself placed upstream of the heating device (4), and **in that** said heating device (4) is placed upstream of the cementitious material (1).

2. System according to claim 1, **characterized in that** the heat transfer fluid (2) consists of an inert gas.

3. System according to any one of claims 1 or 2, **characterized in that** the humidification device (3) and the heating device (4) each operate on command, and may be activated independently of one another depending on the use of said system (100), either in the storage phase or in the withdrawal phase.

4. System according to any one of claims 1 to 3, **characterized in that** the mass fraction of ettringite in the cementitious material (1) lies between 20% and 90%.

5. System according to any one of claims 1 to 4, **characterized in that** the cementitious material has a porosity of between 10% and 90%.

6. System according to any one of claims 1 to 5, **characterized in that** the cementitious material (1) has a permeability between 10⁻¹⁷m² and 10⁻¹¹m².

7. System according to any one of claims 1 to 6, **characterized in that** the cementitious material (1) has a mechanical resistance in compression of between 0.1 MPa and 70MPa.

8. System according to any one of claims 1 to 7, **characterized in that** the water insulator (11) consists of a sealed wall that is designed to prevent water vapor from coming into contact with the cementitious material (1).

9. System according to any one of claims 1 to 8, **characterized in that** the thermal insulator (12) consists of at least one material to be chosen from among glass wool and polystyrene, and **in that** said at least one waterproof material is placed around the water insulator (11).

10. System according to any one of claims 1 to 9, **characterized in that** the humidification device (3) comprises at least one humidifier (7) capable of charging said fluid with water (2).

11. Method of storage/withdrawal of thermal energy from a storage/withdrawal system (100) according to any one of claims 1 to 10, **characterized in that**, in the heat storage phase, the method involves the following steps,
- a heating step by means of the heating device (4) of the heat transfer fluid (2) so as to obtain a hot gas whose temperature is higher than 300°C,
- a step of direct passage of said hot gas through the cementitious material (1) comprising ettringite, causing endothermic dehydration of said material (1) and constituting a heat storage phase.

12. Method according to claim 11, **characterized in that** the heat storage phase extends over a period of several days, said period being dictated by the amount of cementitious material and the fluid flow rate used in said method.

13. Method according to any one of claims 11 or 12, **characterized in that**, in the heat withdrawal phase, the method comprises the following steps,
- a step of humidifying the heat transfer fluid (2) by means of the humidification device (3) to obtain a humidified gas,
- a step of direct passage of said humidified gas through the cementitious material (1) comprising ettringite, which adsorbs water vapor and then hydrates,
- an exothermic reaction step which generates heat that is transported by the heat transfer fluid (2), transforming the initially cold and humid gas into a hot and dry gas.

14. Method according to any one of claims 11 to 13, **characterized in that** the method comprises a step of removing carbon dioxide in the heat transfer fluid (2) before it passes through the cementitious material (1) comprising ettringite, so as to avoid a carbonation reaction of said material (1).
